(19) Europäisches Patentamt
European Patent Office
Office européen des brevets

(11) **EP 2 918 136 B1**

(12) **EUROPEAN PATENT SPECIFICATION**

(45) Date of publication and mention
of the grant of the patent:
**20.12.2017 Bulletin 2017/51**

(51) Int Cl.:
*H04B 5/00* <sup>(2006.01)</sup>  *H04B 17/318* <sup>(2015.01)</sup>
*H04L 5/14* <sup>(2006.01)</sup>  *H04L 29/06* <sup>(2006.01)</sup>
*H04L 29/08* <sup>(2006.01)</sup>  *H04W 8/08* <sup>(2009.01)</sup>
*H04W 24/08* <sup>(2009.01)</sup>  *H04W 28/02* <sup>(2009.01)</sup>
*H04W 48/14* <sup>(2009.01)</sup>  *H04W 48/18* <sup>(2009.01)</sup>
*H04W 72/00* <sup>(2009.01)</sup>  *H04W 72/02* <sup>(2009.01)</sup>
*H04W 72/04* <sup>(2009.01)</sup>  *H04W 72/12* <sup>(2009.01)</sup>
*H04W 80/10* <sup>(2009.01)</sup>  *H04W 88/02* <sup>(2009.01)</sup>

(21) Application number: **13842606.9**

(22) Date of filing: **27.09.2013**

(86) International application number:
**PCT/US2013/062340**

(87) International publication number:
**WO 2014/052850 (03.04.2014 Gazette 2014/14)**

(54) **OS LEVEL WLAN/CELLULAR AGGREGATION FOR INTEGRATED FEMTO AND AP DEPLOYMENTS**

WLAN-/ZELLEN-AGGREGATION AUF BETRIEBSSYSTEMEBENE FÜR INTEGRIERTE FEMTOZELLEN- UND AP-BEREITSTELLUNGEN

AGRÉGATION WLAN/CELLULAIRE AU NIVEAU OS POUR DÉPLOIEMENTS FEMTO ET AP INTÉGRÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 US 201261707784 P
25.06.2013 US 201313926273**

(43) Date of publication of application:
**16.09.2015 Bulletin 2015/38**

(73) Proprietor: **Intel Corporation
Santa Clara, CA 95054 (US)**

(72) Inventors:
• **SIROKTIN, Alexander
Tel-Aviv (IL)**
• **FWU, Jong-Kae
Sunnyvale, California 94087 (US)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2008/109415    KR-A- 20090 083 269
US-A1- 2009 264 124    US-A1- 2009 265 542
US-A1- 2011 143 796    US-A1- 2012 044 808**

• **SAMSUNG: 'HARQ-ACK Transmission in
Response to E-PDCCH Detection' R1-120193 ,
3GPP TSG RAN WG1 #68 06 February 2012,
DRESDEN, GERMANY, XP050562758 Retrieved
from the Internet:
<URL:http://www.3gpp.org/ftp/tsg ran/wgl
rll/TSGR1 68/Docs/R1-120193.zip>**

EP 2 918 136 B1

## Description

CLAIM OF PRIORITY

TECHNICAL FIELD

Some embodiments pertain to wireless communications. Some embodiments relate to aggregation of multiple wireless protocols such as WLAN and cellular protocols.

BACKGROUND

As cellular technology has grown in popularity among users, carriers looking to increase coverage and offload traffic from their networks have begun deploying smaller, lower powered base stations called femto base stations. In some examples, these femto base stations may be small enough to be placed within homes to provide cellular coverage for handsets in the home. For a 3rd Generation cellular network, these home femto base stations may be called Home Node Bs (HNB) and for 4th Generation cellular networks, these home femto base stations may be called Home eNodeBs (HeNB). The HNB and HeNB provide 3G and 4G coverage for handsets within the limited range of the femto cell provided by the femto base station (e.g., within a home and immediate vicinity or within a public space) by incorporating the capabilities of a standard NodeB and eNodeB (respectively).

The femto cells communicate with the UE over the traditional air interface as defined by the wireless specification and are connected to the cellular network provider's core network over an existing broadband network connection (e.g., a residential broadband connection). These femto base stations may interface over that network connection with a cellular carrier's Femto Cell Gateway (e.g., an HeNB GW or HNB GW) which aggregates traffic from a large number of femto cells provided by the femto base stations back into the existing cellular operator's core network through the standard cellular interfaces. The femto base stations may also interface with a Security Gateway (SeGW) (either separate or integrated with the femto cell gateway). The SeGW may establish IPsec tunnels with the HeNBs and HNBs using IKEv2 signaling for tunnel management. These IPsec tunnels may be used to deliver all voice, messaging, and packet services between the HeNBs and HNBs and the cellular core network through the broadband connection. HeNBs and HNBs can either be a closed subscriber group (CSG) in which only certain authorized individuals may connect to or an open subscriber group (OSG) in which the public may utilize. WO-A-2008109415 e.g. discloses a femto base station supporting simultaneously two links utilizing different wireless communication protocols. The links are addressed to different zones and therefore to different users.

BRIEF DESCRIPTION OF THE DRAWINGS

FIG. 1 is a diagram of a system for O/S level WLAN/Cellular aggregation according to some examples of the present disclosure
FIG. 2 is a schematic of a femto base station and a mobile device according to some examples of the present disclosure
FIG. 3 is a flowchart of an example method of connecting multiple aggregated links according to some examples of the present disclosure.
FIG. 4A and 4B are flowcharts of example methods of a virtual network interface according to some examples of the present disclosure.
FIG. 5 is a diagram of a machine according to some examples of the present disclosure.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

To improve coverage and to offload traffic from the carrier's network, Femto base stations may be equipped with additional wireless networking capabilities in addition to the cellular capabilities. For example, the femto base station may have a second wireless transmitter/receiver operating according to a second (and different) wireless protocol. For example, an integrated 802.11 access point (e.g., an 802.11n or 802.11ac access point as defined by the Institute for Electronics and Electrical Engineers). These additional wireless capabilities allow for offloading of the traffic of mobile devices (e.g., UEs) which support both wireless protocols to free up cellular resources.

Many user equipment (UE) devices may be able to connect using both the primary (e.g., the cellular) wireless communication standard and the secondary (e.g., a WLAN standard such as an 802.11 standard) wireless communication standard. These devices may connect to both wireless links at the same time, but they may only utilize one wireless link. For example, the UE may remain connected to the LTE network, but all traffic would be routed through the WLAN connection. For example, these devices may prioritize the connections based upon certain factors. Thus, a User Equipment (UE) which supports both WLAN and 4G LTE might prioritize the WLAN connection such that if it comes within range of the WLAN access point, it may transfer all traffic through the WLAN.

Disclosed in some examples are methods, systems, and machine readable mediums for utilizing both wireless links simultaneously in an efficient and seamless manner. A virtual network interface at the Operating System level of both the femto base station and the mobile station may multiplex and demultiplex packets across both wireless links, thus increasing bandwidth, all while keeping the existence of these multiple links hidden to the application layers, which allows flexibility and increases reliability. The application layers utilize the same Internet Protocol address and the same network interface to send and receive packets regardless of what wireless link the packet is ultimately sent on. This makes the connection state of each constituent communication link of the virtual network interface transparent to the application layer and allows for adding and removing wireless links to the virtual network interface without impacting the packet flow to and from the applications. So long as a single wireless link exists is associated with the virtual interface, the IP Address may remain valid.

Placing the virtual network interface at the O/S level decreases the implementation complexity as it allows for implementations of this concept without significant changes to the wireless telecommunication standards. In some examples, no standardization changes are required, in other examples, limited standards changes are needed for a mobile device to determine that the femto base station supports this functionality and vice versa.

The virtual network interface may multiplex and de-multiplex traffic between the application layer and the network interfaces which manage the wireless links. Multiplexing is a process of combining multiple streams of data packets into one stream. In the context of the present disclosure, multiplexing may be taking streams of packets from multiple wireless links (e.g., from WLAN and Cellular links) and combining them into one stream that is sent to the application layer through the virtual network interface. De-Multiplexing is the reverse process where a single stream of packets from a single source is spread across multiple network links. In the context of the present disclosure, de-multiplexing may be taking streams of packets received at the virtual interface (in some examples, the packets are from the application layer) and spreading them across multiple links.

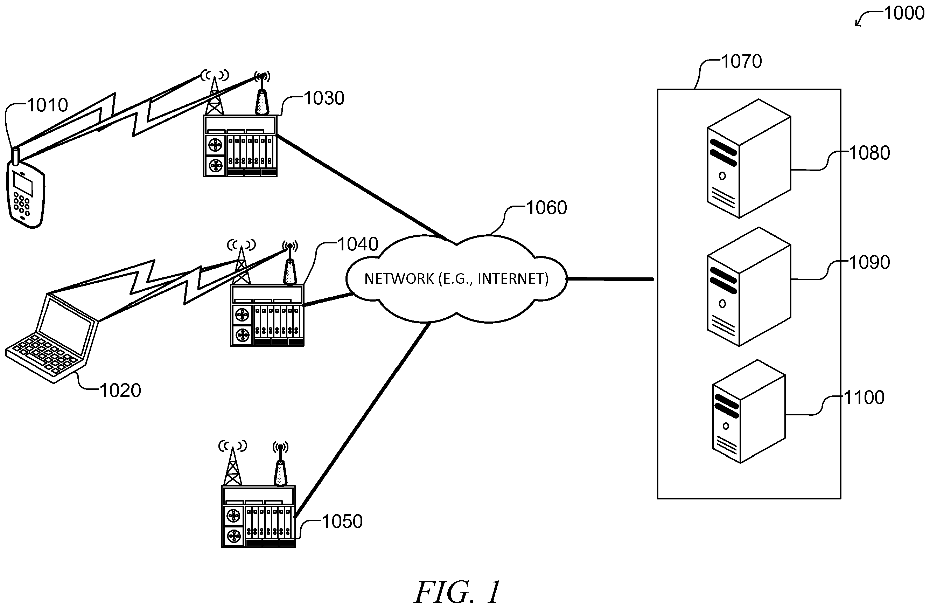

FIG. 1 shows a schematic of a system 1000 according to some examples of the present disclosure. Mobile devices 1010 and 1020 may have multiple network interfaces such that they may be able to establish multiple wireless links with Femto base stations 1030-1050 (e.g., a HNB or a HeNB) using different wireless protocols. Example wireless protocols include Wideband Code Division Multiple Access (WCDMA) standards such as Universal Mobile Telecommunications Standard (UMTS) promulgated by the Third Generation Partnership Project (3GPP), Orthogonal Frequency Division Multiple Access (OFDMA) standards such as Long Term Evolution (LTE) standards (including LTE-Advanced) also promulgated by 3GPP such as LTE release 12, 802.11 Wireless LAN (WLAN) standards (e.g.,

802.11n, 802.11ac) promulgated by the Institute for Electronic and Electrical Engineers (IEEE) such as 802.11n-2009 published Oct 29, 2009, a WiMAX 802.16 standard also promulgated by the IEEE such as 802.16-2009, and the like.

As one example, computing device 1020 may establish a first link over LTE with femto base station 1040 and then establish a second simultaneous link with femto base station 1040 over 802.11ac. In order to accomplish this, devices 1010 and 1020 may contain functionality to provide to applications on those devices a virtual network interface which multiplexes and demultiplexes the physical wireless links so as to give the impression of one physical link with the combined bandwidth of each individual physical link including providing to those applications a single Internet Protocol (IP) Address. Mobile devices 1010 and 1020 may include user equipments (UEs) including smartphones, tablet computers, laptop computers, desktop computers or any other computing device which is able to connect to two wireless links.

Femto base stations 1030-1050 may multiplex the wireless links in order to provide data received over both links to upper layers in the cellular protocol stack. This information may then be tunneled over network 1060 to a core network of the cellular provider 1070. Core network of the cellular provider 1070 may include one or more femto cell gateways 1080, femto cell security gateways 1090 and one or more other processing components 1100 (e.g., home location registers, visiting location registers, components from the Evolved Packet Core (EPC) such as a Mobility Management Entity (MME), Home Subscriber Server (HSS), serving gateway, Packet Data Network Gateway, Policy and Charging Rules Function Server, or the like). Femto base stations 1030-1050 may also de-multiplex downstream data heading to the mobile devices across the multiple wireless links.

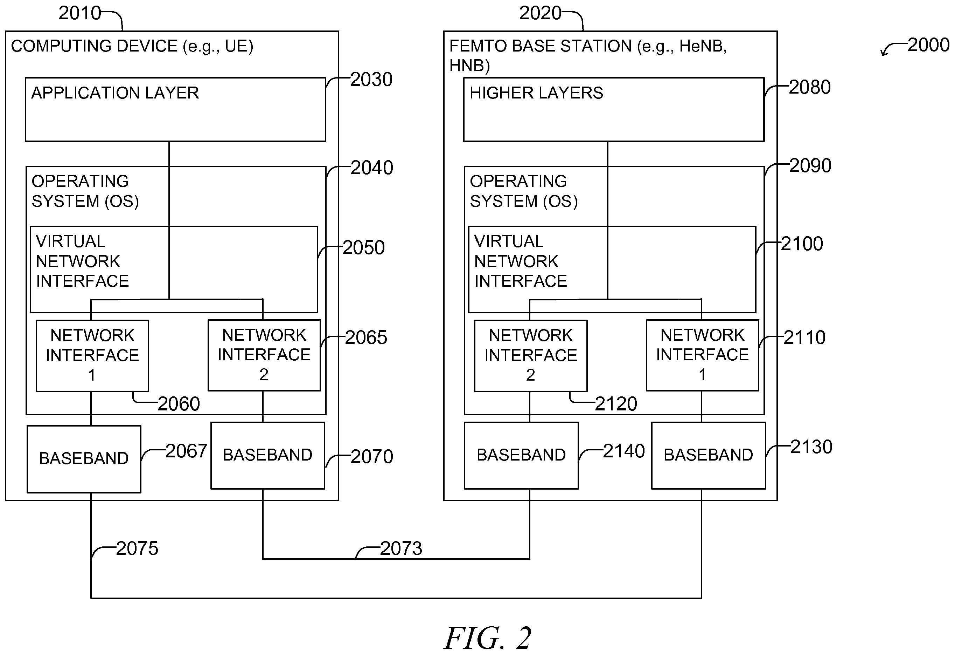

Turning now to FIG. 2, a more detailed schematic of the computing device (e.g., a UE) 2010 and the femto base station (e.g., HeNB or HNB) 2020 are shown. Application layer 2030 consists of one or more applications which provide content and services to the user of the computing device. For example, the applications may perform useful tasks beyond the running of the computing device itself. The applications may utilize one or more services provided by an operating system 2040, including one or more network interfaces, such as virtual network interface 2050. Operating system 2040 is designed to operate and control the hardware of computing device 2010. Network interfaces 1 and 2 (2060 and 2065) interface with and control the baseband 2070 to establish and maintain wireless links 2073 and 2075. Baseband functions 2067 and 2070 perform signal processing and implement the device's realtime radio transmission operations for multiple wireless protocols. The baseband functions 2067 and 2070 may be implemented on one or more physical baseband processors. Baseband functions 2067 and 2070 may implement a plurality of radio protocols such as LTE, UMTS, 802.11, WiMax, or the like. The radio protocols implemented by the baseband functions 2067 and 2070 may be the same or different radio protocols. For example, baseband function 2067 may implement an LTE radio protocol and baseband function 2070 may implement an Institute for Electrical and Electronics Engineers (IEEE) 802.11 radio protocol. Radio protocols may include the physical layer, the medium access and control (MAC) layer, a Radio Link Control (RLC) layer, a Physical Data Convergence Protocol (PDCP) layer a Radio Resource Control Layer (RRC) and the like.

Virtual network interface 2050 provides an integrated network interface for application layer 2030. That is, application layer 2030 may utilize virtual network interface 2050 to send and receive packets to and from the femto base station 2020 and may have no awareness of network interfaces 1 and 2 (2060 and 2065). Virtual network interface 2050 may determine the connection statuses of network interfaces 1 and 2 (and thus the wireless links 2073 and 2075), determine the availability for simultaneous wireless connections with the femto base station 2020, multiplex packets received from network interfaces 1 and 2 for delivery to the applications in the application layer, and demultiplex packets received from applications in the application layer onto the network interface 1 and 2.

The femto base station 2020 may contain similar functionality in baseband functions 2130 and 2140 which may provide one or more of: LTE, UMTS, 802.11, WiMax, or other radio transmission and reception capabilities. For example, femto base station 2020 may utilize one of baseband functions 2130 or 2140 to provide a "cell" for cellular radio communications with one or more UE's. Additionally, one of baseband functions 2130 or 2140 may provide an access point functionality according to an 802.11 family of standards. Baseband functions 2130 and 2140 perform signal processing and implements the device's real-time radio transmission operations. Baseband functions 2130 and 2140 may implement a plurality of radio protocols such as LTE, UMTS, 802.11, WiMax, or the like. The baseband functions 2130 and 2140 may implement the physical layer, the medium access and control (MAC) layer, a Radio Link Control (RLC) layer, a Physical Data Convergence Protocol (PDCP) layer a Radio Resource Control Layer (RRC) of the wireless protocols, and the like. Baseband functions 2130 and 2140 may implement two different radio protocols. In addition, baseband functions 2130 and 2140 may be physically implement on one or more baseband processors.

Network Interfaces 1 and 2 (2120 and 2110) interface with and control the baseband processor 2130 to establish and maintain wireless links 2073 and 2075. Virtual network interface 2100 provides one integrated network interface for higher layers 2080 by multiplexing packets received from network interfaces 1 and 2 (2120 and 2110) and demultiplexing packets received the virtual network interface 2100. Virtual network interface 2100 provides packets to and sends packets from the higher layers 2080. Higher layers may include other layers of the cellular network stack.

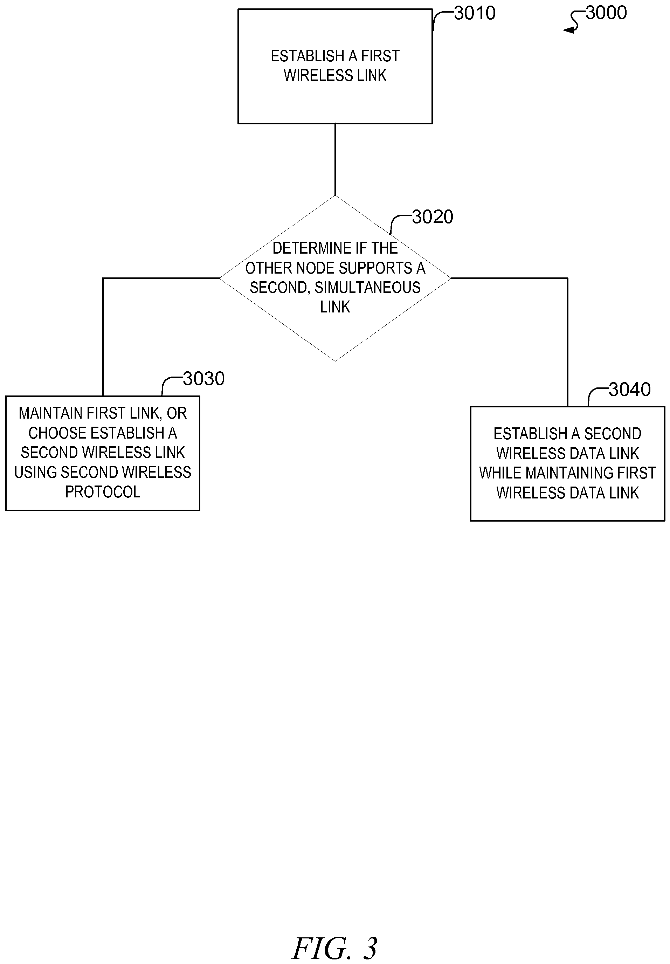

Turning now to FIG. 3, a method 3000 of providing network aggregation according to some examples is shown. At 3010 the femto base station and the computing device may establish a first wireless link utilizing a first wireless protocol (e.g., the cellular protocol). Once the first wireless link is established, the femto cell and the computing device may exchange messages to determine their capabilities. For example, the femto cell and the computing device may determine if either or both of them supports another wireless link on another wireless protocol different than the first wireless protocol. In some examples, the determination may also include a determination 3020 if the second link is supported simultaneously with the first. In some examples the Internet Protocol Address of the first wireless link is reused for the second wireless link.

In order to determine each other's capabilities, the mobile devices and the femto cells may exchange control messages on any of the wireless links. For example, the mobile devices and the femto cells may exchange RRC signaling messages on the cellular link, such as by utilizing an enhanced UECapabilityEnquiry/ UECapabilityInformation message which indicates that the mobile device supports the aggregation of multiple different wireless links. The femto cell may also broadcast support for this feature. For example, in LTE, this may be broadcast in the System information broadcast on the Broadcast Control Channel (BCCH). In other examples, other configuration messages of other wireless protocols may also or in the alternative be employed or extended to signal this capability. For example, an 802.11n HT Capability Information element (IE) may include a field or be modified to include a field indicating that the mobile device has the capability to aggregate multiple wireless links and likewise the beacon frame sent by the femto base station's access point may be used to signal this capability - for example, in a vendor specific information element. Other messages in other standards may also be modified. Adding this functionality may require changes to the LTE, UMTS, WiMAX, 802.11 protocols and subsequently changes in the baseband processors or the network interfaces that control the baseband processors.

In other examples, the virtual interface of the UE or femto base station may send a predefined message that is not part of one of the wireless protocols to the other node (e.g., the UE or the femto base station) once a first wireless connection is established, for example, as an application layer message, such as a broadcast packet. The virtual interface of the femto cell may be configured to listen for these special predefined messages. If the virtual interface of the femto cell detects this message, the femto cell's virtual interface may create and send a reverse message indicating the availability of the aggregation feature and negotiating parameters. The messages may be intercepted by the virtual interfaces of the femto cell and the mobile device and thus may not be passed to higher layers of the protocol stack. If the mobile device (e.g., UE) sends a message and the femto cell does not have a virtual network interface, the message will be ignored as not recognized by any other layers. This may allow for the implementation of the aggregation feature without modifications to any of the wireless protocols that it utilizes.

In yet other examples, the mobile devices and the femto base stations may be able to determine support for this capability through a predetermined list of supported mobile devices and femto base stations. For example, each femto base station may have an identification associated with it. The base station may broadcast this as part of its normal cellular broadcast message. The mobile device may have a list of femto station identifications that support this feature. Likewise, the femto base stations may have a list of International Mobile Subscriber Identity (IMSI)s that support this feature.

In still other examples, starting from a particular wireless standards release (e.g., Release 13 of the 3GPP standards) this feature may be mandatory. In these examples, no signaling may be necessary to signal support.

Finally, the feature may be configurable by an end user. For example, the end user may explicitly turn on and off this feature through a user interface on the mobile device and the femto base station.

If the femto base station or the computing device do not support the virtual network interface aggregation functionality, the devices may maintain the first link, or may choose to disconnect the first link and connect a second link over a second protocol at operation 3030. For example, if the femto cell and the computing device are currently connected over LTE, but a WLAN connection is available (and aggregation support is not available), the two network nodes may decide (based upon a predetermined priority, signal strength, traffic load, or the like) to switch to the WLAN connection.

If aggregation in the OS level is supported, at 3040, the nodes establish the second wireless link and begin multiplexing and demultiplexing packets across the two wireless links. Note that during initiation of the second wireless link, a new Internet Protocol (IP) address is not assigned. In the context of LTE, the Packet Data Network Gateway (P-GW) of the operator's core network assigns IP Addresses for specific radio bearers when the mobile device (e.g., the User Equipment or UE) requests a Packet Data Network (PDN) connection - typically when the UE attaches to the network. The multiplexing and demultiplexing of traffic happens at lower layers, thus the core network is not aware of the multiple wireless links. The core network simply sees the combined traffic of each link as uplink packets over the already established radio bearers and IP address(es) For downlink traffic sent from the core network, the downlink packets are sent by the core network to the femto base station over the radio bearers and the virtual network interface of the femto base station may simply de-multiplex packets onto the plurality of wireless links. For cases in which multiple IP Addresses are assigned to the UE by the Packet-Gateway (P-GW) (e.g., when the UE has multiple Packet Data Network (PDN) connections), the virtual network interface may bind the other wireless link to one of the assigned IP addresses. Thus the virtual network interface may aggregate the link for one of the IP Addresses and not the others. Which IP address to bind may be determined by a variety of factors such as bandwidth, link quality, link speed, QoS for the bearers assigned the IP addresses, configuration, or the like.

In some examples, the femto base station may support multiple wireless access points. As long as the cellular connection is maintained, the mobile devices may move in and out of range of the second wireless link and maintain the same IP address. The mobile device may move between the varying WLAN access points while maintaining the same IP Address.

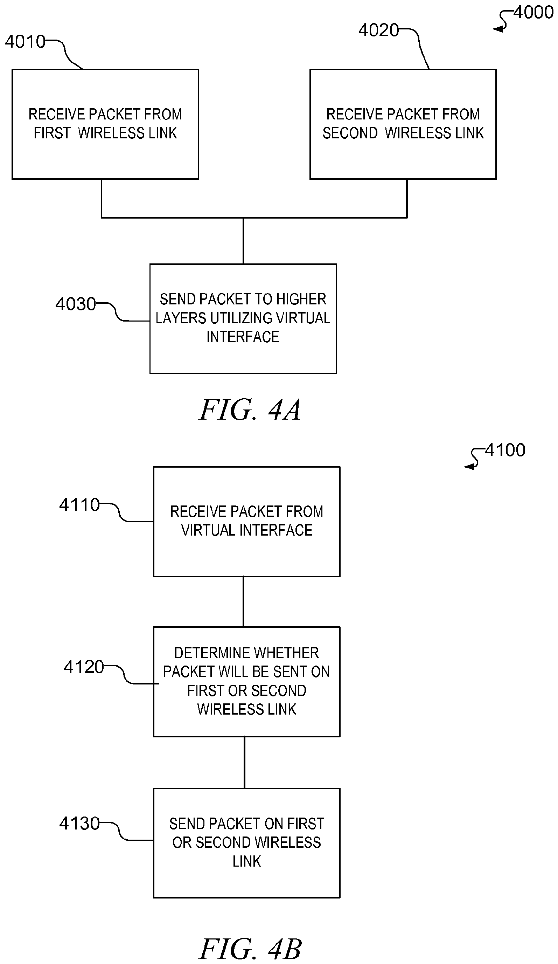

FIG. 4A and 4B show methods 4000 and 4100 of multiplexing and de-multiplexing packets across the wireless links and the virtual interfaces. The methods shown in FIGs. 4A and 4B may be run on either the femto base station or the mobile device. At operation 4010 the femto base station or the mobile device receives a packet from the first wireless link. In some examples the virtual interface may register with the first and second network interfaces to receive a notification when packets are available in a packet buffer for the first and second network interfaces (the packets being initially received from the baseband processor). Upon receipt of the notification that a packet is available, the virtual interface may then read the packet out of the buffer and may send the packet to higher layers. For example, the virtual interface may place the packet in a receive packet buffer for the virtual interface and may notify one or more applications of the presence of a packet for that application. The application may then read the packet out of the buffer. At operation 4020, the virtual interface may receive a packet from the second wireless link 4020 and may send the packet to higher layers at operation 4030. For example, the virtual interface may register to receive notifications when packets are available in the packet buffer for the second wireless interface and when a notification is received that a packet is in the buffer, the virtual interface may place the packet in its receive packet buffer and may notify one or more applications of the presence of a packet for that application. To the application layer, the virtual network interface simply looks like a single network interface even though it is actually receiving and sending data to two or more separate network interfaces.

Turning now to FIG. 4B, a method 4100 of de-multiplexing the virtual network interface is shown. At operation 4110 the virtual interface receives a packet for transmission. In some examples, the packet may be placed in a send buffer of the virtual interface and a notification may be delivered from an application to the virtual interface that a new packet is ready for transmission in the buffer. The virtual interface at operation 4120 determines whether the packet will be sent on the first or second wireless link. The determination of which link to send the packet on may be made based upon a number of factors. For example, the virtual network interface may employ a round robin algorithm where packets are directed to alternating network interfaces. In some examples, the virtual network interface may load balance the wireless links (e.g., allocate the packet to the wireless link with the least amount of unsent packets in its buffer). In yet other examples, the virtual network interface assigns a greater volume of packets to the wireless link with the lowest latency, the highest bandwidth, the wireless link with the best quality (as measured by a Received Signal Strength Indicator), or the like. In some examples, the virtual network interface may then deposit the packet in a send buffer of the first or second network interfaces and then notify the particular interface that a packet is available for transmission.

In other examples, the virtual network interface may assign the incoming packets to the outgoing wireless interfaces based on one or more algorithms. In other examples, the virtual network interface may assign the packet to the wireless link that is most closely matches quality of service (QoS) parameters of the traffic carried by the packet. For example, the application may negotiate a quality of service with the femto base station. The virtual network interface may record the QoS parameters and may determine based on those parameters, which interface better matches those QoS parameters. This determination may happen once, or may happen periodically (e.g., every packet, every passage of a predetermined period of time, or the like). For example, Voice over IP packets, which are small packets, but sensitive to delay may be routed over the wireless link with the lowest latency. File download applications may be less latency sensitive, but may be routed on the link with the greatest bandwidth. As the wireless link chosen may change quickly (e.g., packet-by-packet), this routing may allow for greater conformity with the quality of service. For example, if the latency increases on one of the wireless links (e.g., due to interference requiring multiple retransmissions, or the like), the packets for this traffic class may be moved to other wireless links that are better able to guarantee the bargained for quality of service.

While two wireless links were described, one of ordinary skill in the art with the benefit of Applicant's disclosure will appreciate that more than two wireless links may be aggregated.

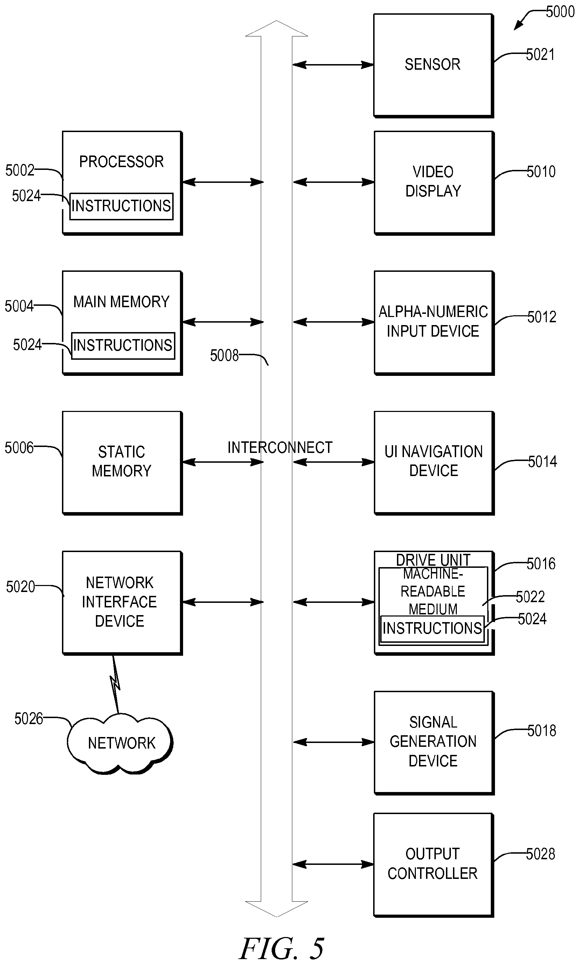

FIG. 5 illustrates a block diagram of an example machine 5000 upon which any one or more of the techniques (e.g., methodologies) discussed herein may perform. For example, the femto base station, mobile device, core network components, or any other component shown in FIGs. 1 or 2 may be or include one or more the components of machine 5000. In alternative embodiments, the machine 5000 may operate as a standalone device or may be connected (e.g., networked) to other machines. In a networked deployment, the machine 5000 may operate in the capacity of a server machine, a client machine, or both in server-client network environments. In an example, the machine 5000 may act as a peer machine in peer-to-peer (P2P) (or other distributed) network environment. The machine 5000 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a non-transitory machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 5000 may include a hardware processor 5002 (e.g., a central processing unit (CPU), a graphics processing unit (GPU), a hardware processor core, or any combination thereof), a main memory 5004 and a static memory 5006, some or all of which may communicate with each other via an interlink (e.g., bus) 5008. The machine 5000 may further include a display unit 5010, an alphanumeric input device 5012 (e.g., a keyboard), and a user interface (UI) navigation device 5014 (e.g., a mouse). In an example, the display unit 5010, input device 5012 and UI navigation device 5014 may be a touch screen display. The machine 5000 may additionally include a storage device (e.g., drive unit) 5016, a signal generation device 5018 (e.g., a speaker), a network interface device 5020, and one or more sensors 5021, such as a global positioning system (GPS) sensor, compass, accelerometer, or other sensor. The machine 5000 may include an output controller 5028, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.).

The storage device 5016 may include a machine readable medium 5022 on which is stored one or more sets of data structures or instructions 5024 (e.g., software) embodying or utilized by any one or more of the techniques or functions described herein. The instructions 5024 may also reside, completely or at least partially, within the main memory 5004, within static memory 5006, or within the hardware processor 5002 during execution thereof by the machine 5000. In an example, one or any combination of the hardware processor 5002, the main memory 5004, the static memory 5006, or the storage device 5016 may constitute machine readable media.

While the machine readable medium 5022 is illustrated as a single medium, the term "machine readable medium" may include a single medium or multiple media (e.g., a centralized or distributed database, and/or associated caches and servers) configured to store the one or more instructions 5024.

The term "machine readable medium" may include any medium that is capable of storing, encoding, or carrying instructions for execution by the machine 5000 and that cause the machine 5000 to perform any one or more of the techniques of the present disclosure, or that is capable of storing, encoding or carrying data structures used by or associated with such instructions. Nonlimiting machine readable medium examples may include solid-state memories, and optical and magnetic media. In an example, a massed machine readable medium comprises a machine readable medium with a plurality of particles having resting mass. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks.

The instructions 5024 may further be transmitted or received over a communications network 5026 using a transmission medium via one or more network interface devices 5020 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 5020 may include one or more physical jacks (e.g., Ethernet, coaxial, or phone jacks) or one or more antennas to connect to the communications network 5026. In an example, the network interface device 5020 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 5000, and includes digital or analog communications signals or other intangible medium to facilitate communication of such software.

OTHER NOTES AND EXAMPLES

In some embodiments, User Equipment (UE) may be arranged for interface-layer aggregation. In these embodiments, the UE may comprise a cellular network physical interface, a wireless local area network (WLAN) physical interface, and a virtual network interface provided to interface between an application layer of the UE and both the cellular and WLAN physical interfaces. The virtual network interface may be arranged to be assigned a single IP address for communication with a Femto base station using both the cellular network physical interface and the WLAN physical interface. The femto base station may comprise a Home enhanced Node B (HeNB) integrated with a WLAN access point (AP).

In these embodiments, applications operating on the application layer may utilize the single IP address for communicating directly with the virtual network interface utilizing either or both cellular network and WLAN communications. In these embodiments, only the virtual network interface is visible to the application layer. Furthermore, only the virtual network interface is arranged to be assigned an IP address as the physical network interfaces (i.e., the cellular network physical interface and the WLAN physical interface) do not need to be assigned an IP address. Accordingly, the process of adding or removing the WLAN physical interface will be transparent to the application layer.

In these embodiments, interface-level aggregation may comprise a link-layer aggregation that is performed at the OS network interface layer for the different physical networks (e.g., a cellular network and a WLAN). This is unlike some conventional techniques that perform a low-level aggregation at the MAC layer (i.e., MAC layer aggregation). In some of these embodiments, the link-layer aggregation may comprise WLAN/3GPP-LTE link-layer aggregation functionality. In some embodiments, the HeNB may be a Femto H(e)NB or LTE femto cell that is integrated with a WLAN AP may be referred to as an integrated HeNB/AP.

In some embodiments, the virtual network interface, the cellular network physical interface and the WLAN physical interface are part of an operating-system (OS) network interface layer. The OS network interface layer may be arranged to perform link-layer aggregation for the cellular network physical interface and the WLAN physical interface. In some of these embodiments, a single IP address may be used for multiple network connections that are combined in parallel to increase throughput beyond what a single connection could sustain and to provide redundancy in case one of the links fails.

In some of these embodiments, the WLAN physical interface is arranged to communicate with a WLAN interface of the integrated eNB/AP in accordance with a WLAN communication technique. The cellular network physical interface is arranged to communicate with the integrated a cellular network physical interface of the integrated eNB/AP in accordance with a cellular communication technique. In some of these embodiments, the RF and baseband circuitry of the UE may be appropriately configured by either the WLAN physical interface for WLAN communications or by the cellular network physical interface for cellular network communications. In some of these embodiments, the RF and baseband circuitry of the UE may be appropriately configured by both the WLAN physical interface for WLAN communications and by the cellular network physical interface for cellular network communications. In some embodiments, the RF and baseband circuitry may have separate portions for the WLAN communications and for cellular network communications, although this is not a requirement.

In some LTE embodiments, the cellular network physical interface may be arranged to communicate with the cellular network physical interface of the integrated eNB/AP in accordance with a cellular communication technique (e.g., an OFDMA technique). In some other UMTS embodiments, the femto base station may be an integrated UMTS nodeB/AP and the cellular network physical interface may be arranged to communicate with the cellular network physical interface in accordance with another UMTS cellular communication technique (e.g., a CDMA technique).

In some embodiments, the virtual network interface may be implemented in software and not connected to a physical medium, while the physical network interfaces (i.e., the cellular network physical interface and the WLAN physical interface) are arranged to be connected to a physical medium (i.e., cellular or WLAN channels).

In some embodiments, the virtual network interface may be initially assigned the single IP address for cellular network communications using the cellular network physical interface. When WLAN access becomes available, the WLAN physical interface may be added to the virtual network interface to allow the virtual network interface to route traffic through the WLAN physical interface.

In these embodiments, when the WLAN physical interface may be added to the virtual network interface, the WLAN physical interface becomes connected to the virtual network interface. In some embodiments, the UE and the femto base station may negotiate when the WLAN physical interface will be added and ready to use. In some embodiments, the WLAN physical interface is added to the virtual network interface after an activation delay time.

In some embodiments, the cellular network physical interface is arranged to communicate with a cellular network physical interface of the femto base station using a wireless cellular communication technique, and the WLAN physical interface may be arranged to communicate with a WLAN physical interface of the femto base station using a WLAN communication technique. The wireless cellular communication technique may use a cellular wireless medium and the WLAN communication technique may use WLAN medium.

In some embodiments, the wireless cellular communication technique comprises use of orthogonal frequency division multiple access (OFDMA) in either a frequency division duplexing (FDD) or time-division duplexing (TDD) mode, and the WLAN communication technique comprises an IEEE 802.11 communication technique using a basic service set (BSS) or an extended service set (ESS) in accordance with a medium access control technique comprising either carrier-sense multiple access with collision avoidance (CSMA/CA) or Enhanced Distributed Channel Access (ECDA). In some embodiments, the use of OFDMA may be in accordance with the 3GPP LTE UMTS standards. In other embodiments, the wireless cellular communication technique may be in accordance another UMTS standard, such as a 3G cellular standard and may use code-division multiple access (CDMA).

In some embodiments, the UE may include a driver to run on the OS network interface layer to perform (among other things) packet reordering. Accordingly, since the driver runs on the OS and performs packet reordering, neither the WLAN nor cellular protocol stacks (of the WLAN and cellular network physical interfaces,) are affected by the single IP address operation of the virtual network interface. In some embodiments, packets of a single traffic flow can be communicated concurrently over both the WLAN and cellular interfaces.

In some embodiments, the UE may be arranged to notify the femto base station that the UE supports WLAN/3GPP-LTE link-layer aggregation functionality using radio-resource control (RRC) messaging. The RRC messaging may include a UECapabilityEnquiry RRC message and a UECapabilityInformation message. The UE may be arranged to respond to the UECapabilityEnquiry RRC message from the femto base station with the UECapabilityInformation message indicating that the UE supports WLAN/3GPP-LTE link-layer aggregation.

In some embodiments, at least one of the UECapabilityEnquiry RRC message and the UECapabilityInformation message may include aggregation capabilities including an activation delay time for WLAN network activation. In these embodiments, the UE and the femto base station may be arranged to use an enhanced version of UE Capability Enquiry/UE Capability Information message exchange that include aggregation capabilities including an activation delay time for WLAN network activation. In some embodiments, dynamic capability negotiation may also be performed.

In some embodiments, the UE and the femto base station may be arranged to perform radio-resource control (RRC) signaling to discover interface level aggregation capabilities of each other including an activation delay time for WLAN network activation.

In some embodiments, support for interface-level aggregation may be pre-provisioned in the UE and the femto base station, although this is not a requirement. When interface-level aggregation is pre-provisioned, RRC signaling to discover interface level aggregation capabilities does not need to be performed.

In some of these embodiments, the UE and the femto base station may perform a capability exchange negotiation to determine each other's capabilities. In some other embodiments (e.g., when support for interface-level aggregation is pre-provisioned), the UE and the femto base station may assume each other support link-layer aggregation/interface-level aggregation and no negotiation may be necessary.

In some embodiments, the UE and the femto base station may be configured to initially communicate using their cellular network physical interfaces and subsequently communicate using both interfaces following WLAN network authentication. In some of these embodiments, communications may be completely or partially offloaded from the cellular network to the WLAN (i.e., WLAN offload).

In some embodiments, Linux bonding may be performed in which the cellular network physical interface and the WLAN physical interface are combined into a "bonded" network interface (i.e., by the virtual network interface).

In some embodiments, the UE may include RF and baseband circuitry configurable by the WLAN physical interface for WLAN communications and configurable by the cellular network physical interface for cellular network communications. In some embodiments, the RF and baseband circuitry may be configurable for simultaneous WLAN and cellular network communications.

NUMBERED EXAMPLE EMBODIMENTS

Example 1 includes subject matter (such as a method, means for performing acts, machine readable medium including instructions which when performed by a machine, cause the machine to perform operations, or an apparatus configured to perform) comprising establishing, at a user equipment (UE), a first wireless data link with a femto base station using a first wireless communication protocol; determining that the femto base station supports a simultaneous data link utilizing a second wireless communication protocol; responsive to determining that the femto base station supports a simultaneous data link: establishing, at the UE, a second wireless data connection with the femto base station utilizing the second wireless communication protocol while maintaining the first wireless link; demultiplexing a plurality of outbound packets received at a virtual network interface across the first and second data connections; and multiplexing a plurality of inbound packets received over both the first and second data connections across the virtual network interface.

In Example 2 the subject matter of example 1 may optionally include wherein the first wireless communication standard is one of: a Long Term Evolution (LTE) wireless communication standard and a Universal Mobile Telecommunications Standard (UMTS).

In Example 3 the subject matter of any one or more of examples 1-2 may optionally include wherein the second wireless communication standard is an IEEE 802.11 wireless communication standard.

In Example 4 the subject matter of any one or more of examples 1-3 may optionally include wherein determining that the femto base station supports a simultaneous data connection comprises determining from a Radio Resource Control message exchange that the femto base station supports the simultaneous data connection.

In Example 5 the subject matter of any one or more of examples 1-4 may optionally include notifying the femto base station that simultaneous data connections are supported at the UE during the Radio Resource Control message exchange.

In Example 6 the subject matter of any one or more of examples 1-5 may optionally include wherein the femto base station is a Home eNodeB (HeNB).

In Example 7 the subject matter of any one or more of examples 1-6 may optionally include, wherein the femto base station is a Home Node B (HNB).

In Example 8 the subject matter of any one or more of examples 1-7 may optionally include wherein demultiplexing comprises: determining whether to transmit each packet over the first wireless data link or the second wireless data link based upon a determination of whether the first or second wireless data connection is more likely to meet a determined QoS requirement for each packet.

Example 9 includes or may optionally be combined with the subject matter of any one or more of Examples 1-8 to include subject matter (such as a device, apparatus, or machine) such as a user equipment (UE) comprising a first network interface configured to: establish a first wireless data link with a femto base station using a first wireless communication protocol; determine that the femto base station supports a simultaneous data link utilizing a second wireless communication protocol; a second network interface configured to: responsive to determining that the femto base station supports a simultaneous data link establish a second wireless data connection with the femto base station utilizing the second wireless communication protocol; and a virtual network interface resident in an operating system of the UE and configured to make the first and second data links appear to be one combined data link to an application layer.

In Example 10, the subject matter of any one or more of examples 1-9 may optionally include wherein the first wireless communication standard is one of: a Long Term Evolution (LTE) wireless communication standard and a Universal Mobile Telecommunications Standard (UMTS).

In Example 11, the subject matter of any one or more of examples 1-10 may optionally include a touch screen input device.

In Example 12, the subject matter of any one or more of examples 1-11 may optionally include wherein the first network interface is configured to determine that the femto base station supports a simultaneous data connection by at least being configured to determine from a Radio Resource Control message exchange that the femto base station supports the simultaneous data connection.

In Example 13, the subject matter of any one or more of examples 1-12 may optionally include wherein the first network interface is configured to determine that the femto base station supports a simultaneous data connection by at least being configured to determine that the femto base station is in a list of predetermined femto base stations.

In Example 14, the subject matter of any one or more of examples 1-13 may optionally include wherein the virtual network interface is configured to make the first and second data links appear to be one combined data link to an application layer by at least being configured to demultiplex a plurality of packets received at the virtual network interface from the application and determining whether to transmit each of the plurality of packets over the first wireless data link or the second wireless data link based upon a round robin schedule and transmitting each packet over the determined wireless link.

Example 15 includes or may optionally be combined with the subject matter of any one or more of Examples 1-14 to include subject matter (such as a device, apparatus, or machine) such as a home eNodeB (HeNB) comprising: a first network interface configured to: establish a first wireless data link with a user equipment (UE) using a first wireless communication protocol; determine that the UE supports a simultaneous data link utilizing a second wireless communication protocol; a second network interface configured to: responsive to determining that the UE supports a simultaneous data link establish a second wireless data connection with the UE utilizing the second wireless communication protocol; and a virtual network interface configured to: demultiplex a plurality of outbound packets received at a virtual network interface across the first and second data connections; and multiplex a plurality of inbound packets received over both the first and second data connections across the virtual network interface.

In Example 16 the subject matter of any one or more of examples 1-15 may optionally include wherein the first wireless communication standard is one of: a Long Term Evolution (LTE) wireless communication standard and a Universal Mobile Telecommunications Standard (UMTS).

In Example 17 the subject matter of any one or more of examples 1-16 may optionally include wherein the second wireless communication standard is an 802.11 wireless communication standard.

In Example 18 the subject matter of any one or more of examples 1-17 may optionally include wherein the first network interface is configured to determine that the UE supports a simultaneous data connection by at least being configured to determine from a Radio Resource Control message exchange that the UE supports the simultaneous data connection.

In Example 19 the subject matter of any one or more of examples 1-18 may optionally include wherein the virtual network interface is configured to make the first and second data links appear to be one combined data link to a core network by at least being configured to demultiplex a plurality of packets received at the virtual network interface from the application and determining whether to transmit each of the plurality of packets over the first wireless data link or the second wireless data link based upon a round robin schedule and transmitting each packet over the determined wireless link.

Example 20 includes or may optionally be combined with the subject matter of any one or more of Examples 1-19 to include subject matter (such as a method, means for performing acts, machine readable medium including instructions, that when performed by a machine cause the machine to perform acts, or an apparatus configured to perform) comprising: establishing a first wireless data link with a user equipment (UE) using a first wireless communication protocol; determining that the UE supports a simultaneous data link utilizing a second wireless communication protocol; responsive to determining that the UE supports a simultaneous data link establishing a second wireless data connection with the UE utilizing the second wireless communication protocol; demultiplexing a plurality of outbound packets received at a virtual network interface across the first and second data connections; and multiplexing a plurality of inbound packets received over both the first and second data connections across the virtual network interface.

In Example 21 the subject matter of any one or more of examples 1-20 may optionally include wherein the first wireless communication standard is one of: a Long Term Evolution (LTE) wireless communication standard and a Universal Mobile Telecommunications Standard (UMTS).

In Example 22 the subject matter of any one or more of examples 1-21 may optionally include wherein the second wireless communication standard is an 802.11 wireless communication standard.

In Example 23 the subject matter of any one or more of examples 1-22 may optionally include wherein the first network interface is configured to determine that the UE supports a simultaneous data connection by at least being configured to determine from a Radio Resource Control message exchange that the UE supports the simultaneous data connection.

In Example 24 the subject matter of any one or more of examples 1-23 may optionally include wherein the virtual network interface is configured to make the first and second data links appear to be one combined data link to a core network by at least being configured to demultiplex a plurality of packets received at the virtual network interface from the application and determining whether to transmit each of the plurality of packets over the first wireless data link or the second wireless data link based upon a round robin schedule and transmitting each packet over the determined wireless link.

A user equipment comprising: a receiver arranged to receive, on an enhanced physical downlink control channel (ePDCCH), one of a lowest control channel element index ($n_{CCE}$) and a lowest enhanced control channel element index (neCCE), a user equipment specific starting offset ($N_{PUCCH}^{(1)}$) and at least one additional offset-related parameter; a processor arranged to determine allocation of an uplink resource of a physical uplink control channel (PUCCH) for Hybrid Automatic Repeat reQuest-ACKnowledgement (*HARQ-ACK*) transmission based the one of the lowest control channel element index ($n_{CCE}$) and the lowest enhanced control channel element index ($n_{eCCE}$), the user equipment specific starting offset ($N_{PUCCH}^{(1)}$) and at least one selected from the at least one additional offset-related parameter; and a transmitter arranged to transmit a signal on the PUCCH using the allocated uplink resource.

**Claims**

1. A method comprising:

   establishing, at a user equipment (UE), a first wireless data link with a femto base station using a first wireless communication protocol;
   determining that the femto base station supports a simultaneous data link utilizing a second wireless communication protocol;
   responsive to determining that the femto base station supports a simultaneous data link:

   establishing, at the UE, a second wireless data connection with the femto base station utilizing the second wireless communication protocol while maintaining the first wireless data link;
   demultiplexing a plurality of outbound packets received at a virtual network interface across both the first and second data connections; and
   multiplexing a plurality of inbound packets received over both the first and second data connections across the virtual network interface.

2. The method of claim 1, wherein the first wireless communication standard is one of: a Long Term Evolution (LTE) wireless communication standard and a Universal Mobile Telecommunications Standard (UMTS).

3. The method of claim 2, wherein the second wireless communication standard is an IEEE 802.11 wireless communication standard.

4. The method of claim 1, wherein determining that the femto base station supports a simultaneous data connection comprises: determining from a Radio Resource Control message exchange that the femto base station supports the simultaneous data connection.

5. The method of claim 4, comprising notifying the femto base station that simultaneous data connections are supported at the UE during the Radio Resource Control message exchange.

6. The method of claim 1, wherein the femto base station is a Home eNodeB (HeNB).

7. The method of claim 1, wherein the femto base station is a Home Node B (HNB).

8. The method of claim 1, wherein demultiplexing comprises:

determining whether to transmit each packet over the first wireless data link or the second wireless data link based upon a determination of whether the first or second wireless data connection is more likely to meet a determined Quality of Service (QoS) requirement for each packet.

9. A user equipment (UE) comprising:

a first network interface configured to:

establish a first wireless data link with a femto base station using a first wireless communication protocol;
determine that the femto base station supports a simultaneous data link utilizing a second wireless communication protocol;

a second network interface configured to:

responsive to determining that the femto base station supports a simultaneous data link establish a second wireless data connection with the femto base station utilizing the second wireless communication protocol; and

a virtual network interface resident in an operating system of the UE and configured to make the first and second data links appear to be one combined data link to an application layer.

10. The UE of claim 9, wherein the first wireless communication standard is one of: a Long Term Evolution (LTE) wireless communication standard and a Universal Mobile Telecommunications Standard (UMTS).

11. The UE of claim 9, comprising a touch screen input device.

12. The UE of claim 9, wherein the first network interface is configured to determine that the femto base station supports a simultaneous data connection by at least being configured to determine from a Radio Resource Control message exchange that the femto base station supports the simultaneous data connection.

13. The UE of claim 9, wherein the first network interface is configured to determine that the femto base station supports a simultaneous data connection by at least being configured to determine that the femto base station is in a list of predetermined femto base stations.

14. The UE of claim 9, wherein the virtual network interface is configured to make the first and second data links appear to be one combined data link to an application layer by at least being configured to demultiplex a plurality of packets received at the virtual network interface from the application and determining whether to transmit each of the plurality of packets over the first wireless data link or the second wireless data link based upon a round robin schedule and transmitting each packet over the determined wireless link.

15. A machine-readable storage including machine-readable instructions, when executed, implements a method as claimed in any preceding method claims.

**Patentansprüche**

1. Verfahren, welches umfasst:

Herstellen, an einer Benutzereinrichtung (User Equipment, UE), einer ersten drahtlosen Datenverbindung mit einer Femto-Basisstation unter Verwendung eines ersten Drahtloskommunikationsprotokolls;
Bestimmen, dass die Femto-Basisstation eine simultane Datenverbindung unterstützt, die ein zweites Drahtloskommunikationsprotokoll benutzt;
in Reaktion auf das Bestimmen, dass die Femto-Basisstation eine simultane Datenverbindung unterstützt:

Herstellen, an der UE, einer zweiten drahtlosen Datenverbindung mit der Femto-Basisstation unter Benutzung des zweiten Drahtloskommunikationsprotokolls bei gleichzeitiger Aufrechterhaltung der ersten drahtlosen Datenverbindung;
Demultiplexen mehrerer ausgehender Pakete, die an einer virtuellen Netzschnittstelle über sowohl die erste als auch die zweite Datenverbindung empfangen werden; und
Multiplexen mehrerer eingehender Pakete, die über sowohl die erste als auch die zweite Datenverbindung über die virtuelle Netzschnittstelle empfangen werden.

2. Verfahren nach Anspruch 1, wobei der erste Drahtloskommunikationsstandard einer von Folgenden ist: ein Long Term Evolution (LTE) Drahtloskommunikationsstandard oder ein Universal Mobile Telecommunications Standard (UMTS).

3. Verfahren nach Anspruch 2, wobei der zweite Drahtloskommunikationsstandard ein IEEE 802.11 Drahtloskommunikationsstandard ist.

**4.** Verfahren nach Anspruch 1, wobei das Bestimmen, dass die Femto-Basisstation eine simultane Datenverbindung unterstützt, umfasst: Bestimmen aus einem Radio Resource Control Nachrichtenaustausch, dass die Femto-Basisstation die simultane Datenverbindung unterstützt.

**5.** Verfahren nach Anspruch 4, welches das Benachrichtigen der Femto-Basisstation umfasst, dass an der UE während des Radio Resource Control Nachrichtenaustauschs simultane Datenverbindungen unterstützt werden.

**6.** Verfahren nach Anspruch 1, wobei die Femto-Basisstation ein Home eNodeB (HeNB) ist.

**7.** Verfahren nach Anspruch 1, wobei die Femto-Basisstation ein Home Node B (HNB) ist.

**8.** Verfahren nach Anspruch 1, wobei das Demultiplexen umfasst:

Bestimmen, ob jedes Paket über die erste drahtlose Datenverbindung oder die zweite drahtlose Datenverbindung übertragen werden soll, basierend auf einer Bestimmung, ob die erste oder die zweite drahtlose Datenverbindung mit größerer Wahrscheinlichkeit eine bestimmte Dienstgüte (Quality of Service, QoS)-Anforderung für jedes Paket erfüllt.

**9.** Benutzereinrichtung (User Equipment, UE), welche umfasst:

eine erste Netzschnittstelle, die dafür ausgelegt ist:

eine erste drahtlose Datenverbindung mit einer Femto-Basisstation unter Verwendung eines ersten Drahtloskommunikationsprotokolls herzustellen;
zu bestimmen, dass die Femto-Basisstation eine simultane Datenverbindung unterstützt, die ein zweites Drahtloskommunikationsprotokoll benutzt;

eine zweite Netzschnittstelle, die dafür ausgelegt ist:

in Reaktion auf das Bestimmen, dass die Femto-Basisstation eine simultane Datenverbindung unterstützt, eine zweite drahtlose Datenverbindung mit der Femto-Basisstation unter Benutzung des zweiten Drahtloskommunikationsprotokolls herzustellen; und

eine virtuelle Netzschnittstelle, die in einem Betriebssystem der UE resident ist und dafür ausgelegt ist zu bewirken, dass die erste und die zweite Datenverbindung für eine Anwendungsschicht als eine einzige kombinierte Datenverbindung erscheinen.

**10.** UE nach Anspruch 9, wobei der erste Drahtloskommunikationsstandard einer von Folgenden ist: ein Long Term Evolution (LTE) Drahtloskommunikationsstandard oder ein Universal Mobile Telecommunications Standard (UMTS).

**11.** UE nach Anspruch 9, welche eine Berührungsbildschirm-Eingabevorrichtung umfasst.

**12.** UE nach Anspruch 9, wobei die erste Netzschnittstelle dafür ausgelegt ist zu bestimmen, dass die Femto-Basisstation eine simultane Datenverbindung unterstützt, indem sie wenigstens dafür ausgelegt ist, aus einem Radio Resource Control Nachrichtenaustausch zu bestimmen, dass die Femto-Basisstation die simultane Datenverbindung unterstützt.

**13.** UE nach Anspruch 9, wobei die erste Netzschnittstelle dafür ausgelegt ist zu bestimmen, dass die Femto-Basisstation eine simultane Datenverbindung unterstützt, indem sie wenigstens dafür ausgelegt ist zu bestimmen, dass die Femto-Basisstation in einer Liste von vorbestimmten Femto-Basisstationen enthalten ist.

**14.** UE nach Anspruch 9, wobei die virtuelle Netzschnittstelle dafür ausgelegt ist zu bewirken, dass die erste und die zweite Datenverbindung für eine Anwendungsschicht als eine einzige kombinierte Datenverbindung erscheinen, indem sie wenigstens dafür ausgelegt ist, mehrere Pakete zu demultiplexen, die an der virtuellen Netzschnittstelle von der Anwendung empfangen werden, und basierend auf einem Reihum-Schema zu bestimmen, ob jedes der mehreren Pakete über die erste drahtlose Datenverbindung oder die zweite drahtlose Datenverbindung übertragen werden soll, und jedes Paket über die bestimmte drahtlose Verbindung zu übertragen.

**15.** Maschinenlesbarer Speicher, der maschinenlesbare Anweisungen beinhaltet, die, wenn sie ausgeführt werden, ein Verfahren nach einem der vorhergehenden Verfahrensansprüche implementieren.

**Revendications**

**1.** Procédé comportant les étapes consistant à :

établir, au niveau d'un équipement d'utilisateur (UE), une première liaison de données sans fil avec une femto-station de base en utilisant un premier protocole de communication sans fil ; déterminer que la femto-station de base prend en charge une liaison de données simultanée utilisant un deuxième protocole de communication sans fil ;

en réaction à la détermination selon laquelle la femto-station de base prend en charge une liaison de données simultanée :

établir, au niveau de l'UE, une deuxième liaison de données sans fil avec la femto-station de base utilisant le deuxième protocole de communication sans fil tout en maintenant la première liaison de données sans fil ;

démultiplexer une pluralité de paquets sortants reçus au niveau d'une interface virtuelle de réseau à travers à la fois les première et deuxième liaisons de données ; et multiplexer une pluralité de paquets entrants reçus via à la fois les première et deuxième liaisons de données à travers l'interface virtuelle de réseau.

2. Procédé selon la revendication 1, la première norme de communication sans fil figurant parmi : une norme de communication sans fil d'Évolution à long terme (LTE) et une Norme universelle de télécommunications mobiles (UMTS).

3. Procédé selon la revendication 2, la deuxième norme de communication sans fil étant une norme de communication sans fil IEEE 802.11.

4. Procédé selon la revendication 1, la détermination de la prise en charge par la femto-station de base d'une liaison de données simultanée comportant l'étape consistant à :

déterminer, à partir d'un échange de messages de gestion des ressources radioélectriques, que la femto-station de base prend en charge la liaison de données simultanée.

5. Procédé selon la revendication 4, comportant l'étape consistant à notifier à la femto-station de base le fait que des liaisons de données simultanées sont prises en charge au niveau de l'UE pendant l'échange de messages de gestion des ressources radioélectriques.

6. Procédé selon la revendication 1, la femto-station de base étant un eNodeB de rattachement (HeNB).

7. Procédé selon la revendication 1, la femto-station de base étant un Noeud B de rattachement (HNB).

8. Procédé selon la revendication 1, le démultiplexage comportant l'étape consistant à :

déterminer s'il convient d'émettre chaque paquet sur la première liaison de données sans fil ou la deuxième liaison de données sans fil d'après une détermination selon laquelle la première ou la deuxième liaison de données sans fil est la plus susceptible de satisfaire une exigence déterminée de qualité de service (QoS) pour chaque paquet.

9. Équipement d'utilisateur (UE) comportant :

une première interface de réseau configurée pour :

établir une première liaison de données sans fil avec une femto-station de base en utilisant un premier protocole de communication sans fil ;

déterminer que la femto-station de base prend en charge une liaison de données simultanée utilisant un deuxième protocole de communication sans fil ;

une deuxième interface de réseau configurée pour :

en réaction à la détermination selon laquelle la femto-station de base prend en charge une liaison de données simultanée, établir une deuxième liaison de données sans fil avec la femto-station de base utilisant le deuxième protocole de communication sans fil ; et

une interface virtuelle de réseau résidente dans un système d'exploitation de l'UE et configuré pour faire apparaître les première et deuxième liaisons de données comme étant une seule liaison de données combinée pour une couche d'application.

10. UE selon la revendication 9, la première norme de communication sans fil figurant parmi : une norme de communication sans fil d'Évolution à long terme (LTE) et une Norme universelle de télécommunications mobiles (UMTS).

11. UE selon la revendication 9, comportant un dispositif d'entrée à écran tactile.

12. UE selon la revendication 9, la première interface de réseau étant configurée pour déterminer que la femto-station de base prend en charge une liaison de données simultanée en étant au moins configurée pour déterminer, à partir d'un échange de messages de gestion des ressources radioélectriques, que la femto-station de base prend en charge la liaison de données simultanée.

13. UE selon la revendication 9, la première interface de réseau étant configurée pour déterminer que la femto-station de base prend en charge une liaison de données simultanée en étant au moins configurée pour déterminer que la femto-station de base figure dans une liste de femto-stations de base prédéterminées.

14. UE selon la revendication 9, l'interface virtuelle de réseau étant configurée pour faire apparaître les première et deuxième liaisons de données comme étant une seule liaison de données combinée pour une couche d'application en étant au moins configurée pour démultiplexer une pluralité de paquets reçus au niveau de l'interface virtuelle de réseau en provenance de l'application et déterminer s'il convient d'émettre chaque paquet de la pluralité de paquets via la première liaison de données sans fil ou la deuxième liaison de données sans fil selon un plan d'ordonnancement cyclique et émettre chaque paquet via la liaison sans fil déterminée.

15. Mémoire lisible par machine comprenant des instructions lisibles par machine qui, lorsqu'elles sont exécutées, mettent en oeuvre un procédé selon l'une quelconque des revendications précédentes de procédé.

*FIG. 1*

*FIG. 2*

```
                                                  ┌─3010              ς─3000
                        ┌──────────────────────┐
                        │   ESTABLISH A FIRST   │
                        │    WIRELESS LINK      │
                        └──────────────────────┘
```

ESTABLISH A FIRST WIRELESS LINK 3010

3000

DETERMINE IF THE OTHER NODE SUPPORTS A SECOND, SIMULTANEOUS LINK 3020

MAINTAIN FIRST LINK, OR CHOOSE ESTABLISH A SECOND WIRELESS LINK USING SECOND WIRELESS PROTOCOL 3030

ESTABLISH A SECOND WIRELESS DATA LINK WHILE MAINTAINING FIRST WIRELESS DATA LINK 3040

*FIG. 3*

FIG. 4A

FIG. 4B

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008109415 A